# EUROPÄISCHE PATENTSCHRIFT

(11) **EP 3 623 353 B1**
(45) Veröffentlichungstag und Bekanntmachung des Hinweises auf die Patenterteilung: **09.03.2022**
(21) Anmeldenummer: 19196592.0
(22) Anmeldetag: 11.09.2019
(51) Int. Cl.: C04B 20/12, C04B 22/00, C04B 22/06, C04B 22/10, C04B 22/14, C04B 22/16, C04B 20/10, C04B 41/50, C04B 41/52

(54) **VERWENDUNG VON STABILISIERTEN ZEMENTHALTIGEN SUSPENSIONEN ZUR HERSTELLUNG VON ZEMENTBESCHICHTUNGEN**
USE OF STABILISED CEMENTITIOUS SUSPENSIONS FOR THE PREPARATION OF CEMENT COATINGS
UTILISATION DE SUSPENSIONS STABILISÉES CONTENANT DU CIMENT DESTINÉES À LA FABRICATION DE REVÊTEMENTS DE CIMENT

(30) Priorität: 11.09.2018 EP 18193729
(43) Veröffentlichungstag der Anmeldung: 18.03.2020
(73) Patentinhaber: Baumit Beteiligungen GmbH, 2754 Waldegg (AT)
(72) Erfinder: LORENZ, Jürgen, 2754 Waldegg (AT); BÖCK, Katharina, 2754 Waldegg (AT); RIPKEN, Manuel, 2754 Waldegg (AT)
(74) Vertreter: SONN Patentanwälte OG

(56) Entgegenhaltungen:
- EP-A1- 2 527 311
- EP-A1- 3 365 307
- WO-A1-2017/067954
- FR-A3- 2 763 937
- US-A1- 2002 009 622

## Beschreibung

Die vorliegende Erfindung betrifft die Verwendung einer stabilisierten zementhaltigen Suspension zur Herstellung einer Zementbeschichtung.

Zement ist ein anorganischer feingemahlener Baustoff, der als Bindemittel eingesetzt wird. Nach dem Anrühren mit Wasser härtet Zement aus und bleibt dauerhaft fest. Viele verschiedene Zementarten mit unterschiedlichen Zusammensetzungen und Eigenschaften sind aus dem Stand der Technik bekannt.

Zement hat eine Vielzahl von Anwendungsgebieten, beispielsweise als Bindemittel für Beton, Mörtel oder Estrich. Beispielsweise kommt Zement in Endbeschichtungssystemen zur Beschichtung diverser Wandbildner im Innen- und Außenbereich zum Einsatz.

Üblicherweise wird Zement vor der Verwendung mit Wasser angerührt, was den Aushärteprozess auslöst. Dabei kommt es zur Hydratation - einer Reaktion zwischen den Zementbestandteilen und dem Anmachwasser. Die Festigkeit der zementhaltigen Zusammensetzung nimmt dadurch zu und der Zement erstarrt und erhärtet.

Aus dem Stand der Technik sind stabilisierte zementhaltige Suspensionen bekannt. In derartigen Suspensionen liegt der Zement zwar zusammen mit Wasser vor, der Aushärteprozess wird aber durch einen Stabilisator aufgehalten oder verlangsamt. Der Aushärteprozess kann durch die Zugabe eines Aktivators ausgelöst werden.

Die FR 2 763 937 beschreibt die Verwendung von Borsäure zur Stabilisierung zementhaltiger Suspensionen. Zur Aktivierung des Aushärteprozesses wird der Zusammensetzung Calciumhydroxid zugefügt.

Die EP 0 081 385 beschreibt die Verwendung von entweder Borsäure oder Glucono-1,5-lacton zur Stabilisierung zementhaltiger Suspensionen. Der Aushärteprozess wird dabei um mehrere Tage bis mehrere Monate verlangsamt. Als Aktivator können unterschiedliche Stoffe eingesetzt werden, unter anderem Basen, wie Calciumhydroxid.

Die US 2002/009622 A1 betrifft Phosphatzement, der zur Beschichtung von Oberflächen durch Sprayen geeignet ist. Der Phosphatzement kann durch die Reaktion von Phosphorsäure mit einer metallischen Base hergestellt werden, wobei diese beiden Zementbestandteile auf eine Oberfläche aufgesprüht werden können.

Die WO 2017/067954 A1 betrifft wässrige Zusammensetzungen mit hoher Lagerstabilität zur Aktivierung des Aushärteprozesses von aluminösen Zementzusammensetzungen.

Die EP 2 527 311 A1 beschreibt Beschichtungssysteme aus zwei Beschichtungszusammensetzungen, wobei die erste Beschichtungszusammensetzung einen migrationsfähigen Wirkstoff enthält und die zweite Beschichtungszusammensetzung einen Aktivator zur Freigabe des in der ersten Beschichtungszusammensetzung enthaltenen migrationsfähigen Wirkstoffs enthält.

Die WO 2013/093344 A1 beschreibt stabilisierte zementhaltige Suspensionen, die Phosphorsäure und andere phosphorhaltige Säuren als Stabilisatoren enthalten. Die beschriebenen Suspensionen können über Monate hinweg stabil sein. Zur Aktivierung des Aushärteprozesses werden Basen eingesetzt.

Die EP 3 365 307 A1 betrifft ein Zweikomponenten-Mörtelsystem, umfassend eine härtbare Aluminiumzementkomponente A in wässriger Phase und eine Initiatorkomponente B in wässriger Phase zur Einleitung des Härtungsprozesses, wobei Komponente A ferner mindestens ein Blockierungsmittel umfasst, ausgewählt aus der Gruppe bestehend aus Phosphorsäure Metaphosphorsäure, Phosphorsäure und Phosphonsäuren, mindestens einen Weichmacher und Wasser und Komponente B, umfassend einen Initiator, mindestens einen Verzögerer, mindestens einen mineralischen Füllstoff und Wasser.

Die aus dem Stand der Technik bekannten stabilisierten zementhaltigen Suspensionen haben den Nachteil, dass sie vor der Anwendung mit einem Aktivator vermischt werden müssen, um den Aushärteprozesses zu aktivieren. Soll beispielsweise eine Zementbeschichtung auf einer Oberfläche hergestellt werden, ist daher ein separater Arbeitsschritt notwendig, bevor die Zusammensetzung auf die Oberfläche aufgetragen werden kann. Außerdem steht dem Anwender nach Aktivierung des Aushärteprozesses nur eine begrenzte Zeit zur Verfügung, um die zementhaltige Zusammensetzung zu verarbeiten.

Es besteht daher Bedarf an einfacheren Verwendungsmöglichkeiten stabilisierter zementhaltiger Suspensionen. Es ist eine Aufgabe der vorliegenden Erfindung, eine solche Verwendungsmöglichkeit zur Verfügung zu stellen.

Diese Aufgabe wird erfindungsgemäß dadurch gelöst, dass eine stabilisierte zementhaltige Suspension, enthaltend zumindest eine phosphorhaltige Säure als Stabilisator, zur Aktivierung des Aushärteprozesses auf eine mit Calciumhydroxyd als Aktivator beschichtete Oberfläche aufgebracht wird.

Bei den bisher im Stand der Technik beschriebenen Verwendungen von stabilisierten zementhaltigen Suspensionen wird der Aktivator vor dem Aufbringen auf die Oberfläche mit der zementhaltigen Suspension vermischt. Bisher wurde es im Gebiet der stabilisierten zementhaltigen Suspensionen als gegeben angesehen, dass eine Vermischung der Suspension mit dem Aktivator vor dem Aufbringen nötig sei, z.B. dass im Fall einer Base als Aktivator, der pH-Wert in der gesamten Suspension erhöht werden müsse. Überraschenderweise hat sich im Zuge der vorliegenden Erfindung herausgestellt, dass der Aushärteprozess ebenfalls ausgelöst werden kann, indem die stabilisierte zementhaltige Suspension auf eine mit dem jeweiligen Aktivator beschichtete Oberfläche aufgebracht wird. Der Aushärteprozess wird dabei in der Nähe der Oberfläche ausgelöst und setzt sich wie eine Kettenreaktion durch die Zementschicht fort.

Die vorliegende Erfindung betrifft daher die Verwendung einer stabilisierten zementhaltigen Suspension, enthaltend zumindest eine phosphorhaltige Säure als Stabilisator, zur Herstellung einer Zementbeschichtung, dadurch gekennzeichnet, dass die stabilisierte zementhaltige Suspension zur Aktivierung des Aushärteprozesses auf eine mit Calciumhydroxyd als Aktivator beschichtete Oberfläche aufgebracht wird. Im Rahmen der vorliegenden Erfindung hat sich herausgestellt, dass der Einsatz von gewissen Basen als Aktivator, insbesondere von Alkalimetallhydroxiden wie Kaliumhydroxid, Natriumhydroxid oder Lithiumhydroxid, zu Ausblühungen auf beschichteten Oberflächen führen kann. Solche Ausblühungen gelten als Bauschäden und sind daher unerwünscht. Überraschenderweise wurden keine oder weniger Ausblühungen beobachtet, wenn Calciumhydroxid als Basen verwendet wurden (siehe Beispiel 6). Nach Meinung der Erfinder - ohne hier an eine Theorie gebunden zu sein - lässt sich diese Beobachtung dadurch erklären, dass beispielsweise Calciumionen als schwer lösliches Calciumcarbonat in die Zementbeschichtung eingebaut werden, während beispielsweise im Fall von Alkalimetallhydroxiden lösliche Salze vorliegen, welche leichter Ausblühungen an der Oberfläche ausbilden können. Der gemäß der vorliegenden Erfindung verwendete Aktivator ist daher Calciumhydroxyd.

Die vorliegende Erfindung betrifft außerdem ein Verfahren zur Herstellung einer Zementbeschichtung auf einer Oberfläche umfassend die Schritte in der folgenden Reihenfolge:
(1) Auftragen von Calciumhydroxyd als Aktivator auf die Oberfläche; und
(2) Auftragen einer stabilisierten zementhaltigen Suspension, enthaltend zumindest eine phosphorhaltige Säure als Stabilisator, auf die Oberfläche;
wobei der Kontakt zwischen dem Aktivator und der stabilisierten zementhaltigen Suspension die Aushärtung der zementhaltigen Suspension auslöst.

Der Begriff "Zementbeschichtung" soll im Rahmen der vorliegenden Erfindung als jede aus Zement hergestellte Schicht verstanden werden. Die Beschichtung muss nicht ausschließlich aus Zement bestehen, Zement muss lediglich bei der Herstellung der Schicht verwendet worden sein. Beispielsweise kann die Zementbeschichtung ein Putz, z.B. ein Wand- oder Deckenputz sein.

Der Aushärteprozess von Beton wird häufig als drei aufeinanderfolgende Phasen umfassend beschrieben: dem Ansteifen, dem Erstarren und dem Erhärten. Die Begriffe "Aushärten" bzw. "Aushärteprozess" sollen im Rahmen der vorliegenden Erfindung als Überbegriff verstanden werden, der allgemein den Übergang von einem nicht festen (flüssigen bzw. suspensionsförmigen) in einen festen Zustand beschreibt. "Aktivierung des Aushärteprozesses" soll im Rahmen der vorliegenden Erfindung als auslösen oder beschleunigen des Aushärteprozesses verstanden werden.

Vorzugsweise enthält die im Rahmen der vorliegenden Erfindung verwendete stabilisierte zementhaltige Suspension einen aluminösen Zement. "Aluminöser Zement" bedeutet in diesem Zusammenhang, dass der Zement Aluminium enthält, vorzugsweise in der Form von Calciumaluminat. Vorzugsweise enthält der Zement Alumiumiumoxid (Al₂O₃) und/oder Calciumoxid (CaO). In einer bevorzugten Ausführungsform kann der Zement außerdem Sulfate enthalten. Vorzugsweise enthält die stabilisierte zementhaltige Suspension daher Calciumoxid, Aluminiumoxid, Sulfate, oder Kombinationen davon.

Viele aus dem Stand der Technik bekannte Stabilisatoren sind besonders effektiv in Kombination mit einem Zement mit hohem Aluminiumanteil. In einer bevorzugten Ausführungsform enthält die stabilisierte zementhaltige Suspension daher einen Zement mit mindestens 1 Gew.-%, vorzugsweise mindestens 2 Gew.-%, besonders bevorzugt mindestens 3 Gew.-%, noch mehr bevorzugt mindestens 5 Gew.-%, noch mehr bevorzugt mindestens 10 Gew.-%, am meisten bevorzugt mindestens 20 Gew.-% Aluminium.

In einer besonders bevorzugten Ausführungsform enthält die stabilisierte zementhaltige Suspension einen Zement entsprechend der europäischen Norm DIN EN 197-1.

Die im Rahmen der vorliegenden Erfindung verwendete stabilisierte zementhaltige Suspension enthält vorzugsweise zumindest eine phosphorhaltige Säure als Stabilisator. Als Stabilisator ist in diesem Zusammenhang ein Stoff zu verstehen, der den Aushärteprozess der zementhaltigen Suspension verhindert oder verlangsamt. Besonders gut geeignete Stabilisatoren sind aus der WO 2013/093344 A1 bekannt.

In einer bevorzugten Ausführungsform ist die phosphorhaltige Säure ausgewählt aus meta-Phosphorsäure, Phosphonsäure, Phosphorsäure, Phosphonaten und Verbindungen, die durch die Reaktion mit Wasser eine oder mehrere dieser Verbindungen bilden.

Die stabilisierte zementhaltige Suspension kann außerdem Kombinationen von Stabilisatoren enthalten, beispielsweise eine Kombination einer phosphorhaltigen Säure mit Borsäure oder einer Carbonsäure.

Vorzugsweise enthält die stabilisierte zementhaltige Suspension zwischen 0,1 Gew.-% und 20 Gew.-%, noch mehr bevorzugt zwischen 0,1 Gew.-% und 15 Gew.-%, noch mehr bevorzugt zwischen 0,1 Gew.-% und 10 Gew.-%, am meisten bevorzugt zwischen 0,3 Gew.-% und 10 Gew.-% an Stabilisatoren bezogen auf die Gesamtmasse der Zementbestandteile.

Die im Rahmen der Erfindung verwendeten stabilisierten zementhaltigen Suspensionen sind vorzugsweise Teil eines Endbeschichtungssystems. Der Begriff "Endbeschichtungssystem" bezeichnet im Rahmen der vorliegenden Erfindung eine Zusammensetzung, die zur Herstellung einer Zementbeschichtung auf einer Oberfläche aufgetragen werden kann. Beispielsweise kann es sich beim Endbeschichtungssystem um einen Putzmörtel handeln.

Vorzugsweise enthält das Endbeschichtungssystem zusätzlich zu der stabilisierten zementhaltigen Suspension Verdicker und/oder Dispergiermittel. Außerdem kann das Endbeschichtungssystem Füllstoffe und/oder Additive enthalten. Geeignete Verdicker, Dispergiermittel, Füllstoffe und Additive sind dem Fachmann bekannt.

Im Rahmen der vorliegenden Erfindung entspricht der Anteil der stabilisierten zementhaltigen Suspension am Endbeschichtungssystem vorzugsweise zwischen 4 Gew.-% und 30 Gew.-%, besonders bevorzugt zwischen 6 Gew.-% und 20 Gew.-%. Bevorzugt ist außerdem ein Anteil von Verdicker am Endbeschichtungssystem zwischen 0,05 Gew.-% und 0,4 Gew.-%, besonders bevorzugt zwischen 0,1 Gew.-% und 0,2 Gew.-%. Außerdem bevorzugt ist ein Anteil von Füllstoffen am Endbeschichtungssystem zwischen 30 Gew.-% und 90 Gew.-%, besonders bevorzugt zwischen 54 Gew.-% und 81 Gew.-% liegt. Besonders bevorzugt ist außerdem ein Anteil von Dispergiermittel am Endbeschichtungssystem zwischen 0,2 Gew.-% und 1,5 Gew.-%, noch mehr bevorzugt zwischen 0,4 Gew.-% und 0,8 Gew.-%. Außerdem ist es bevorzugt, wenn das Endbeschichtungssystem zwischen 1,5 Gew.-% und 8 Gew.-%, besonders zwischen 2,8 Gew.-% und 4,3 Gew.-%, Additive enthält. Besonders bevorzugt ist es außerdem, wenn das Endbeschichtungssystem Wasser in einem Anteil zwischen 5 Gew.-% und 30 Gew.-%, noch mehr bevorzugt zwischen 10 Gew.-% und 15 Gew.-%, enthält. Im Rahmen der vorliegenden Erfindung ist der pH-Wert des Endbeschichtungssystems vorzugsweise niedriger als 9,0, besonders bevorzugt niedriger als 8,5, am meisten bevorzugt niedriger als 8,0.

Bei vielen aus dem Stand der Technik bekannten stabilisierten zementhaltigen Suspensionen kann der Aushärteprozess durch eine Base als Aktivator aktiviert werden. Beispielsweise kann der Aushärteprozess von stabilisierten zementhaltigen Suspensionen die Borsäure und/oder einer phosphorhaltigen Säure als Stabilisator enthalten, durch eine Base aktiviert werden.

Im Rahmen der vorliegenden Erfindung ist daher der Aktivator eine Base, genauer gesagt Calciumhydroxyd. Vorzugsweise wird die mit dem Aktivator beschichtete Oberfläche durch Aufbringen von Kalkmilch als basische Zusammensetzung auf eine Oberfläche hergestellt. Besonders bevorzugt ist es, wenn die basische Zusammensetzung einen pH-Wert höher als 8,0, noch mehr bevorzugt höher als 8,5, am meisten bevorzugt höher als 9,0, hat.

Vorzugsweise enthält die basische Zusammensetzung ein Bindemittel auf Polymerbasis. In einer bevorzugten Ausführungsform enthält die basische Zusammensetzung außerdem Verdicker und/oder Dispergiermittel. Außerdem kann die basische Zusammensetzung Füllstoffe und/oder Additive enthalten. Geeignete Bindemittel, Verdicker, Dispergiermittel, Füllstoffe und Additive sind dem Fachmann bekannt.

Als besonders geeignet hat sich bei der vorliegenden Erfindung eine Ausführungsform erwiesen, bei der der Aktivator als Voranstrich auf die Oberfläche aufgebracht wird. Ein Voranstrich kann auch als "Grundierung" bezeichnet werden.

In einer bevorzugten Ausführungsform enthält der Voranstrich ein Bindemittel auf Polymerbasis. Der Voranstrich enthält vorzugsweise zusätzlich Verdicker, Dispergiermittel, Füllstoffe, Additive, oder Kombinationen davon. Geeignete Bindemittel, Verdicker, Dispergiermittel, Füllstoffe und Additive sind dem Fachmann bekannt.

Vorzugsweise enthält der Voranstrich einen Anteil von Füllstoffen zwischen 20 Gew.-% und 80 Gew.-%, besonders bevorzugt zwischen 30 Gew.-% und 65 Gew.-%. Besonders bevorzugt ist außerdem ein Anteil von Dispergiermittel am Voranstrich zwischen 0,1 Gew.-% und 1 Gew.-%, noch mehr bevorzugt zwischen 0,2 Gew.-% und 0,6 Gew.-%. Außerdem ist es bevorzugt, dass der Voranstrich zwischen 0,5 Gew.-% und 5 Gew.-%, besonders bevorzugt zwischen 1,4 Gew.-% und 2,2 Gew.-%, Additive enthält. Besonders bevorzugt ist es außerdem, wenn der Voranstrich Wasser in einem Anteil zwischen 15 Gew.-% und 60 Gew.-%, noch mehr bevorzugt zwischen 30 Gew.-% und 45 Gew.-%, enthält.

In einer besonders bevorzugten Ausführungsform ist der Aktivator Kalkmilch (Calciumhydroxid gelöst bzw. suspendiert in Wasser) oder enthält Kalkmilch und wird in Form eines Voranstrichs auf die Oberfläche aufgebracht. In dieser Ausführungsform hat der Voranstrich einen pH-Wert höher als 8,0, besonders bevorzugt höher als 8,5, noch mehr bevorzugt höher als 9,0. Da Calciumhydroxid eine Base ist, kann die mit einem Aktivator beschichtete Oberfläche auf diese Weise einfach hergestellt werden.

In einer weiteren besonders bevorzugten Ausführungsform wird Kalkmilch als Aktivator als Spray auf die Oberfläche aufgebracht. In dieser Ausführungsform kann der Aktivator als Spray in einer Sprühdose vorliegen. Die Sprühdose enthält vorzugsweise Treibgase, wie Propan, Butan, Dimethylether; komprimierte Luft, komprimierten Stickstoff, oder Kombinationen davon. In dieser Ausführungsform wird die Kalkmilch vorzugsweise als Aerosol auf die Oberfläche aufgetragen.

In einer weiteren bevorzugten Ausführungsform der vorliegenden Erfindung wird nach Aufbringen der zementhaltigen Suspension auf die mit Kalkmilch als Aktivator beschichtete Oberfläche ein weiterer Aktivator auf die zementhaltige Suspension aufgebracht. Dabei kann es sich entweder um den gleichen Aktivator handeln, mit dem die Oberfläche beschichtet ist, oder um einen anderen Aktivator. Vorzugsweise ist der weitere Aktivator eine Base. Vorzugsweise kann der weitere Aktivator in der Form eines Sprays auf die Oberfläche aufgesprüht werden. Das Aufbringen eines weiteren Aktivators hat den Vorteil, dass der Aushärteprozess der stabilisierten zementhaltigen Suspension sowohl auf der Seite der beschichteten Oberfläche, als auch auf der der Oberfläche abgewandten Seite ausgelöst wird. Dadurch können insbesondere dicke Schichten der stabilisierten zementhaltigen Suspension schnell aushärten.

Im Rahmen der vorliegenden Erfindung ist es bevorzugt, wenn die zementhaltige Suspension nach dem Aushärten eine Schicht mit einer mittleren Schichtdicke von mindestens 0,5 mm (Millimeter), besonders bevorzugt mindestens 1,0 mm, noch mehr bevorzugt mindestens 1,5 mm, am meisten bevorzugt mindestens 2,0 mm bildet.

Im Rahmen der vorliegenden Erfindung ist es außerdem bevorzugt, wenn die Oberfläche eine mineralische Oberfläche ist. Besonders bevorzugt ist es, wenn die Oberfläche eine Wand im Innen- oder Außenbereich, eine Raumdecke, oder ein Teil davon ist. Bevorzugt ist es außerdem, wenn die Zementbeschichtung Teil eines Putzes, vorzugsweise eines Wand- oder Deckenputzes, ist.

Die vorliegende Erfindung wird durch die folgenden Beispiele illustriert, auf welche sie selbstverständlich nicht eingeschränkt ist.

Sämtliche Prozent-Angaben (%) in den Beispielen, wie auch in der gesamten Anmeldung, beziehen sich, wenn nicht anders gekennzeichnet, auf Gewichtsprozent.

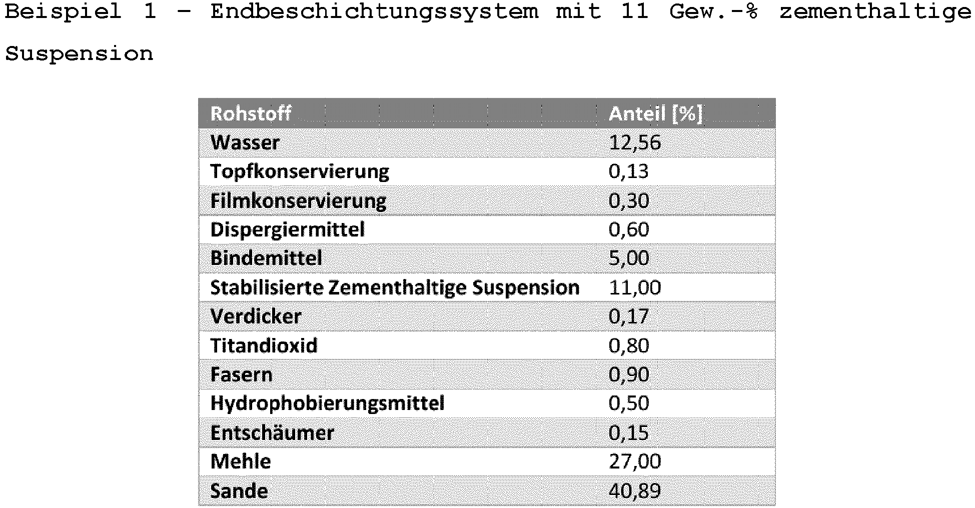

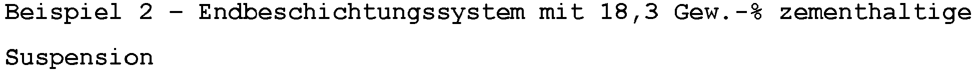

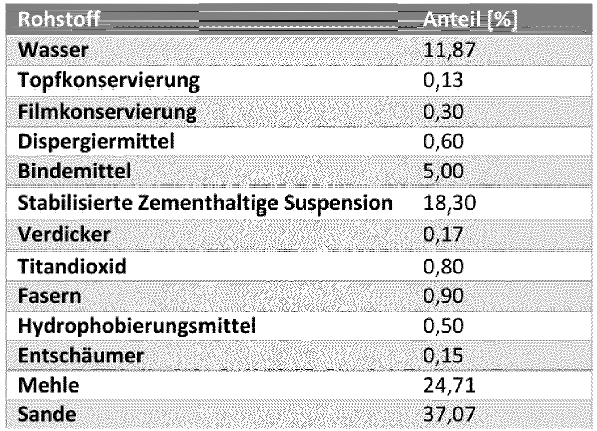

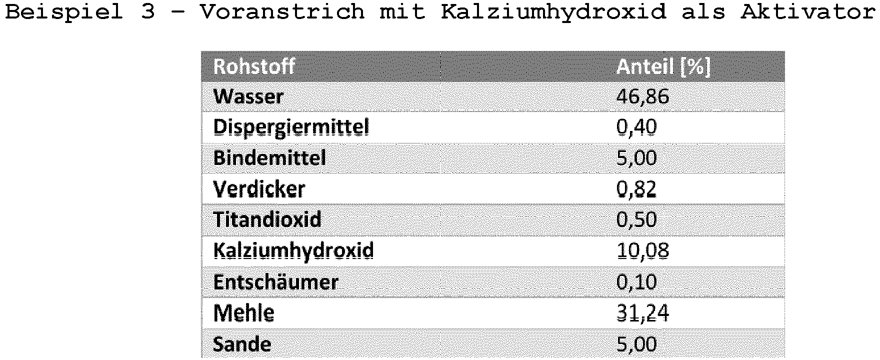

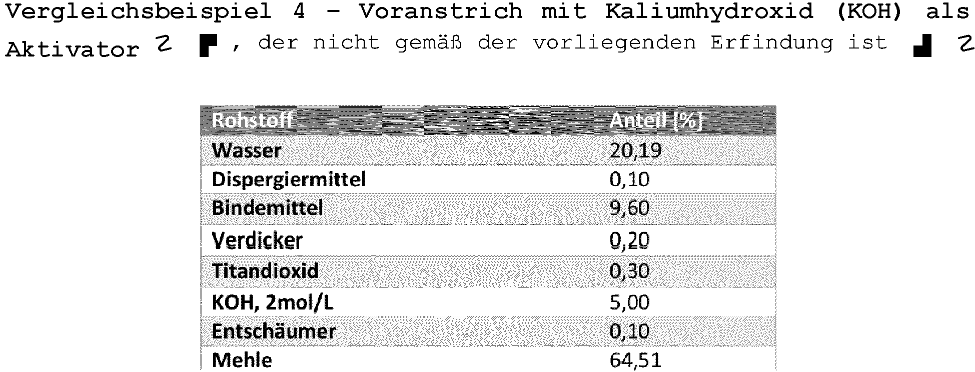

### Beispiel 5 - Herstellung einer Zementbeschichtung

Zur Herstellung einer Zementbeschichtung auf einer Wand wird ein Voranstrich von Beispiel 3 oder 4 (nicht erfindungsgemäß) auf die Wand aufgetragen. Anschließend wird ein Endbeschichtungssystem von Beispiel 1 oder 2 auf die Wand aufgetragen. Der Kontakt des Endbeschichtungssystems mit der mit dem Aktivator beschichteten Oberfläche löst den Aushärtevorgang der stabilisierten zementhaltigen Suspension aus und eine feste Zementbeschichtung entsteht.

### Beispiel 6 - Ausbildung von Ausblühungen beim Einsatz unterschiedlicher Aktivatoren

Zementbeschichtungen wurden wie in Beispiel 5 beschrieben hergestellt. Als Voranstriche wurden die in den Beispielen 3 und 4 (nicht erfindungsgemäß) beschriebenen Zusammensetzungen eingesetzt. Das Endbeschichtungssystem hatte die in Beispiel 1 beschriebene Zusammensetzung, wobei die stabilisierte zementhaltige Suspension aus 95 Gew.-% Calciumaluminatzement und 5 Gew.-% Phosphorsäure bestand.

Nach 10 Tagen wurde die Menge an Ausblühungen auf einer Skala von 0 (keine Ausblühungen) bis 10 (viele großflächige Ausblühungen) bewertet:

| **Voranstrich** | **Base im Voranstrich** | **Ausblühungen** |
|---|---|---|
| Beispiel 3 | Kalziumhydroxid | 1 |
| Beispiel 4 | Kaliumhydroxid | 8 |
| | | |
| | | |

## Patentansprüche

1. Verwendung einer stabilisierten zementhaltigen Suspension, enthaltend zumindest eine phosphorhaltige Säure als Stabilisator, zur Herstellung einer Zementbeschichtung, **dadurch gekennzeichnet, dass** die stabilisierte zementhaltige Suspension zur Aktivierung des Aushärteprozesses auf eine mit Calciumhydroxid als Aktivator beschichtete Oberfläche aufgebracht wird.

2. Verwendung gemäß Anspruch 1, **dadurch gekennzeichnet, dass** die stabilisierte zementhaltige Suspension Calciumoxid, Aluminiumoxid, Sulfate, oder Kombinationen davon enthält.

3. Verwendung gemäß Anspruch 1 oder 2, **dadurch gekennzeichnet, dass** die phosphorhaltige Säure ausgewählt ist aus meta-Phosphorsäure, Phosphonsäure, Phosphorsäure, Phosphonaten und Verbindungen, die durch die Reaktion mit Wasser eine oder mehrere dieser Verbindungen bilden.

4. Verwendung gemäß einem der Ansprüche 1 bis 3, **dadurch gekennzeichnet, dass** die mit Calciumhydroxid als Aktivator beschichtete Oberfläche durch Aufbringen von Kalkmilch auf eine Oberfläche hergestellt wird.

5. Verwendung gemäß Anspruch 4, **dadurch gekennzeichnet, dass** die Kalkmilch einen pH-Wert höher als 8,5 hat.

6. Verwendung gemäß einem der Ansprüche 1 bis 5, **dadurch gekennzeichnet, dass** der Aktivator als Voranstrich oder als Spray auf die Oberfläche aufgebracht wird.

7. Verwendung gemäß einem der Ansprüche 1 bis 6, **dadurch gekennzeichnet, dass** nach Aufbringen der zementhaltigen Suspension auf die mit Calciumhydroxyd als Aktivator beschichtete Oberfläche ein weiterer Aktivator auf die zementhaltige Suspension aufgebracht wird.

8. Verwendung gemäß einem der Ansprüche 1 bis 7, **dadurch gekennzeichnet, dass** die zementhaltige Suspension nach dem Aushärten eine Schicht mit einer mittleren Schichtdicke von mindestens 0,5 mm bildet.

9. Verwendung gemäß einem der Ansprüche 1 bis 8, **dadurch gekennzeichnet, dass** die Oberfläche eine Wand im Innen- oder Außenbereich, eine Raumdecke, oder ein Teil davon ist.

10. Verfahren zur Herstellung einer Zementbeschichtung auf einer Oberfläche umfassend die Schritte in der folgenden Reihenfolge:
(1) Auftragen von Calciumhydroxyd als Aktivator auf die Oberfläche; und
(2) Auftragen einer stabilisierten zementhaltigen Suspension, enthaltend zumindest eine phosphorhaltige Säure als Stabilisator, auf die Oberfläche;
wobei der Kontakt zwischen dem Aktivator und der stabilisierten zementhaltigen Suspension die Aushärtung der zementhaltigen Suspension auslöst.

11. Verfahren gemäß Anspruch 10, **dadurch gekennzeichnet, dass** die phosphorhaltige Säure ausgewählt ist aus meta-Phosphorsäure, Phosphonsäure, Phosphorsäure, Phosphonaten und Verbindungen, die durch die Reaktion mit Wasser eine oder mehrere dieser Verbindungen bilden.

## Claims

1. Use of a stabilised cement-containing suspension, containing at least one phosphorus-containing acid as a stabiliser, for producing a cement coating, **characterised in that** the stabilised cement-containing suspension is applied to a surface coated with calcium hydroxide as an activator in order to activate the setting process.

2. Use according to claim 1, **characterised in that** the stabilised cement-containing suspension contains calcium oxide, aluminium oxide, sulfates, or combinations thereof.

3. Use according to either claim 1 or claim 2, **characterised in that** the phosphorus-containing acid is selected from meta-phosphoric acid, phosphonic acid, phosphoric acid, phosphonates and compounds which form one or more of these compounds through reaction with water.

4. Use according to any of claims 1 to 3, **characterised in that** the surface coated with calcium hydroxide as an activator is produced by applying milk of lime to a surface.

5. Use according to claim 4, **characterised in that** the milk of lime has a pH higher than 8.5.

6. Use according to any of claims 1 to 5, **characterised in that** the activator is applied to the surface as a primer or as a spray.

7. Use according to any of claims 1 to 6, **characterised in that**, after the cement-containing suspension has been applied to the surface coated with calcium hydroxide as an activator, a further activator is applied to the cement-containing suspension.

8. Use according to any of claims 1 to 7, **characterised in that**, after setting, the cement-containing suspension forms a layer having an average layer thickness of at least 0.5 mm.

9. Use according to any of claims 1 to 8, **characterised in that** the surface is an interior or exterior wall, a room ceiling, or part of such a wall or ceiling.

10. Method for producing a cement coating on a surface, comprising the following steps in the following order:
(1) applying calcium hydroxide as an activator to the surface; and
(2) applying to the surface a stabilised cement-containing suspension containing at least one phosphorus-containing acid as a stabiliser;
wherein the contact between the activator and the stabilised cement-containing suspension triggers the setting of the cement-containing suspension.

11. Method according to claim 10, **characterised in that** the phosphorus-containing acid is selected from meta-phosphoric acid, phosphonic acid, phosphoric acid, phosphonates and compounds which form one or more of these compounds through reaction with water.

## Revendications

1. Utilisation d'une suspension contenant du ciment stabilisée, contenant au moins un acide contenant du phosphore comme stabilisant, pour la production d'un revêtement de ciment, **caractérisée en ce que** la suspension contenant du ciment stabilisée est appliquée pour l'activation du processus de durcissement sur une surface revêtue d'hydroxyde de calcium comme activateur.

2. Utilisation selon la revendication 1, **caractérisée en ce que** la suspension contenant du ciment stabilisée contient de l'oxyde de calcium, de l'oxyde d'aluminium, des sulfates ou des combinaisons de ceux-ci.

3. Utilisation selon la revendication 1 ou 2, **caractérisée en ce que** l'acide contenant du phosphore est choisi parmi l'acide méta-phosphorique, l'acide phosphonique, l'acide phosphorique, les phosphonates et les composés qui forment un ou plusieurs de ces composés par la réaction avec l'eau.

4. Utilisation selon l'une des revendications 1 à 3, **caractérisée en ce que** la surface revêtue d'hydroxyde de calcium comme activateur est produite par application de lait de chaux sur une surface.

5. Utilisation selon la revendication 4, **caractérisée en ce que** le lait de chaux a un pH supérieur à 8,5.

6. Utilisation selon l'une des revendications 1 à 5, **caractérisée en ce que** l'activateur est appliqué sur la surface sous forme de couche d'apprêt ou sous forme de spray.

7. Utilisation selon l'une des revendications 1 à 6, **caractérisée en ce qu'**après application de la suspension contenant du ciment sur la surface revêtue d'hydroxyde de calcium comme activateur, un autre activateur est appliqué sur la suspension contenant du ciment.

8. Utilisation selon l'une des revendications 1 à 7, **caractérisée en ce que** la suspension contenant du ciment forme une couche d'une épaisseur de couche moyenne d'au moins 0,5 mm après le durcissement.

9. Utilisation selon l'une des revendications 1 à 8, **caractérisée en ce que** la surface est un mur dans le domaine intérieur ou extérieur, un plafond, ou une partie de celui-ci.

10. Procédé pour la production d'un revêtement de ciment sur une surface comprenant les étapes dans l'ordre suivant:
(1) application d'hydroxyde de calcium comme activateur sur la surface; et
(2) application d'une suspension contenant du ciment stabilisée, contenant au moins un acide contenant du phosphore comme stabilisant, sur la surface;
dans lequel le contact entre l'activateur et la suspension contenant du ciment stabilisée déclenche le durcissement de la suspension contenant du ciment.

11. Procédé selon la revendication 10, **caractérisé en ce que** l'acide contenant du phosphore est choisi parmi l'acide méta-phosphorique, l'acide phosphonique, l'acide phosphorique, les phosphonates et les composés qui forment un ou plusieurs de ces composés par la réaction avec l'eau.
